# EUROPEAN PATENT SPECIFICATION

(11) **EP 2 525 647 B1**
(45) Date of publication and mention of the grant of the patent: **11.07.2018**
(21) Application number: 10805898.3
(22) Date of filing: 06.08.2010
(51) Int. Cl.: A01G 9/029

(54) **PLANTLET HANDLING SYSTEM**
SYSTEM ZUM UMGANG MIT JUNGPFLANZEN
SYSTÈME DE MANIPULATION DE PLANTULES

(30) Priority: 07.08.2009 AU 2009903687; 06.04.2010 AU 2010901431
(43) Date of publication of application: 28.11.2012
(73) Proprietor: Nuplant Pty Ltd, Kent TN9 1BH (GB)
(72) Inventor: TEASDALE, Robert Dixon, Chapel Hill Queensland 4069 (AU)
(74) Representative: Dolleymores
(86) International application number: PCT/AU2010/001008
(87) International publication number: WO 2011/014933

(56) References cited:
- WO-A1-2005/013670
- WO-A1-2009/021274
- FR-A1- 2 724 812
- JP-A- 2002 186 362
- US-A- 4 216 622
- US-A- 4 216 622
- US-A- 5 215 550
- US-A1- 2002 088 173
- US-A1- 2005 016 425
- US-A1- 2008 078 118
- US-A1- 2009 151 248

## Description

### FIELD OF THE INVENTION

This invention relates to a plantlet handling system. This invention has particular application to a plantlet handling system for taking plantlets from rooted or non-rooted tissue culture plantlet to a transferable state, and for illustrative purposes the invention will be described with reference to this application. However we envisage that this invention may find use in other applications such as multiple stages of culture of plantlets.

### BACKGROUND OF THE INVENTION

The reference to any prior art in this specification is not, and should not be taken as, an acknowledgement or any form of suggestion that the referenced prior art forms part of the common general knowledge in the relevant art.

Plant tissue culture involves growth of plants (including plantlets) under usually sterile conditions in nutrient medium in glass or plastic containers. Plantlets are typically grown in groups of up to 40 individual shoots per container. Growth is generally non-uniform due to variation in biomass and physiology of the initial explant, time to root formation, and other factors that are not always readily defined.

After a suitable period of growth, shoot pieces or small plantlets can be dissected from the plantlets to be placed in new medium so that these will form roots or shoot growth for *ex vitro* rooting, or other tissue growth and further grow. There are often more dissected pieces (shoot tips, nodal segments, or small plantlets) than in the original container. Moreover, the plantlets from which shoot pieces have been dissected will generally form new shoots that will grow and be suitable for dissection and planting. In these processes multiplication occurs.

Dissection operations may occur in the growth container, and frequently further dissections of single shoots into multiple pieces may also occur in the growth container, whereby any overhanging leaves or shoots from neighbouring plantlets may impede the operator's efficient access to the target plant being dissected.

When growth has continued sufficiently, such as when rooted shoots of adequate form are available or when the plantlet is developed enough for further *ex vitro* development, the plantlets may be transferred to nursery potting medium, generally requiring removal of nutrient agar as the organic nutrients generally in such agar will encourage unwanted microbial growth. This process is generally labour intensive and can be damaging to plant roots. For practicality all plants in a container are removed and if not meeting root, shoot or other specifications are generally discarded. Slow-growing plantlets generally cannot be allowed more time to grow without detriment to advanced plantlets, and reduction in efficiency.

In standard tissue-culture multiple plantlets sharing one container generally have their roots interwoven throughout substantial volumes of agar in the container. Typical arrangements for tissue-culture of plants do not allow removal of more (or less) advanced individuals, re-sorting of plants into uniform batches for specific treatments or release of plantlets, without discard of plants requiring further growth.

While removal of gelled medium (such as agar) from individual plantlets for transfer ex-vitro is labour demanding and damaging to plantlets, standard tissue-culture processes do not allow a practical alternative for removing gelled medium effectively.

In the transfer of propagated plant material between culture media or between growing environments, the transfer protocols must be selected to overcome the inherent weakness of plantlets in culture media. In WO 2009/021274 there is described a method including the steps of segregating plantlets from a tissue-culture propagation medium into a root-permeable container containing a phytocompatible supporting aqueous gel medium comprising a nutrient solution gelled with an effective amount of a hydrocolloid gel-forming material, acclimating the segregated plantlets in light and air until the roots extend to the bottom of the container, and planting out the acclimated plantlet in its container. There is described a plant propagation container comprising a root permeable sleeve formed of a heat sealable, non-woven cellulosic tissue material having a proportion of polyolefin fibre incorporated therein. This provides a plant propagation transfer method where acclimated plants are more robust than direct-planted propagants and suffer less attrition accordingly.
The described method provides advantages over the prior art of the time. However, the container requires support in a tube or the like that requires manual separation for planting out. Accordingly it would be desirable to provide a plantlet holder that can support the plantlet between culture steps or between the final stage of propagation and planting out directly in the container, and able to be handled mechanically.

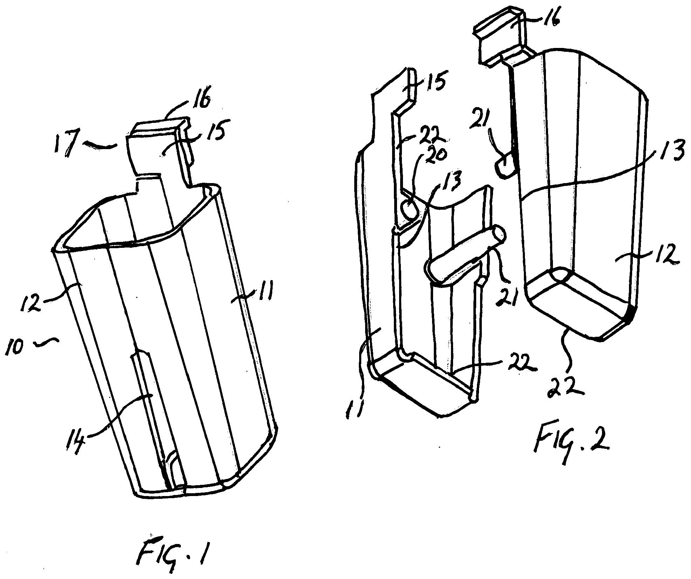

US Patent Publication No. US 2009/0151248 A1 discloses plantlet handling apparatus (countertop gardening appliance, 2). This apparatus includes a housing (vessel, 6) that can contain liquid and/or nutrients ([0044]) within a nutrient medium (growth medium); plantlet holders (seed cartridges, 16) which may be sold in a partially or wholly disassembled state (i.e. formed from a plurality of body portions, [0048]) and forming, in assembly, an open-topped container (Fig. 1B) having a tapering form from a top to a base portion ([0047]), apertures (substantially vertical slits, 303) open to the vessel (6) including a base aperture (central aperture, 304); a plantlet holder support (growing surface, 8) located within the vessel (6) and supporting the seed cartridges (16) in the growth medium.

### SUMMARY OF THE INVENTION

In one aspect the present invention resides broadly in plantlet handing apparatus including:
a housing containing a liquid or gel nutrient medium;
a plurality of plantlet holders each including a plurality of body portions forming, in assembly, an open-topped container having apertures **allowing passage of** said nutrient medium, and engagement means disposed between adjacent said body portions and orientate said body portions in assembly for handling;
a plantlet holder support located in said housing and supporting said plurality of plantlet holders with said apertures immersed in said nutrient medium in use, and
a closure for said housing forming a substantially airtight seal with said housing and having one or more liquid water-excluding portions of selected permeability to metabolic gases produced or required by plantlets, **characterized in that** there is provided a lug or projection on each said plantlet holder for handling the plantlet holder, and including a laminar flow cabinet including a robotic platform comprising a robot system engaging said lug or projection for moving said plantlet holders between a source location, a workstation location and a delivery location in said laminar flow cabinet.

The housing may be formed of any material compatible for use in conjunction with plantlet raising conditions and media. For example the housing may comprise a polypropylene tub or tray. The housing is preferably transparent or translucent. For example the housing may be made of food grade polypropylene such as that used to produce take-away food containers. The housing may include integrally formed sealing means adapted to cooperate with the closure to provide the substantially airtight seal.

The housing may include an integral supporting portion adapted to cooperate with the plantlet holder support to maintain the plurality of plantlet holders in the nutrient medium in use. Alternatively the housing may include an integral plantlet holder portion. For example the housing may be formed with integral wells each configured to support a plantlet holder.

The housing may comprise a substantially flat bottomed enclosure for the nutrient medium and into which the supported plantlet holders depend. The void volume of nutrient medium between plantlet holders may be controlled by the use of integrally moulded void filler portions. Alternatively the housing base may be provided with re-entrants to enable close stacking of housings with the plantlet holder support and plantlet holders installed. For example the housing base may be formed with integral recesses adapted to cooperate with upper portions of the plantlet holders whereby the upper portions are located in the integral recesses in the stack.

The housing may be any suitable shape. For example, in order that a wide range of existing polypropylene tub and closure moulding may be used, the housing may be round or rectangular in general shape. However, it is understood that any custom shape may be adopted.

The nutrient medium is selected from aqueous liquid and aqueous gel media suitable for the selected plantlet species, its stage of growth and/or the conditions of culture to be imposed. The medium may be substantially sterile or at least be of a selected degree of biological inactivity before use.

The aqueous gel nutrient medium may include inorganic nutrient and is preferably selected from phytocompatible aqueous gels comprising an inorganic nutrient solution. For example, the solution may be gelled with an effective amount of a hydrocolloid gel forming material. The gel forming material may be selected from natural or synthetic hydrocolloid forming materials such as seaweed-derived gelling agents (including agar), modified carbohydrate gelling agents or the like. Preferably the material forms a self supporting gel at low concentrations. For example, network gel polymers at ≤0.8% solids may be used.

The inorganic nutrients may comprise any nutrient or combination of nutrients in concentration known in the art of hydroponic cultivation and propagation media. In addition, the aqueous gel medium is preferably prepared under sterile conditions especially where the plantlets are segregated from sterile plant propagation stock.

The nutrient medium may be changed or supplemented to allow for diffusion into and/or out of the plantlet holders without disrupting the plantlet roots. For example, plantlets can be grown in agar-gelled medium containing organic as well as inorganic nutrients. The plantlet holder allows such plantlets to be prepared for transfer *ex-vitro* by immersing in a liquid nutrient solution or water to allow diffusion of organic components from the plantlet holder into the surrounding medium. This can be repeated if necessary with fresh surrounding medium until the organic components of the agar-gelled medium are sufficiently depleted. Alternatively, the same approach can be adopted (with or without root washing) to introduce different nutrient media, hormones and plant growth regulators and the like.

The closure may comprise any suitable lid adapted to close off an open top of the housing by means of a substantially airtight seal. For example the closure may comprise a lid having a complementary engagement periphery adapted to mechanically and sealingly engage a corresponding peripheral lip of the housing. In the case of the polypropylene housings described above, the common and well developed technology in respect of sealing mechanical closure of take-away food containers may be utilized.

The maintenance of an isolated environment inside the housing by way of the mechanical seal between the housing and the closure is of course compromised by opening the housing. The closure may from time to time be opened. While the acclimation environment may be kept as clean as possible, contamination may occur. It has been surprisingly determined that contamination is reduced by providing the closure with a relatively deep peripheral flange that extends downward of the housing lip to define an annular dead space that is not subject to convection mixing with the environment. The flange appears to lower the risk of contamination by influencing the flow of condensation and airborne aerosols and particles entering the housing.

Accordingly in a further aspect this invention resides broadly in a plantlet handing apparatus including:
a housing for a nutrient medium and
a closure for said housing having a substantially airtight seal to said housing and a peripheral flange that extends downward of the housing lip to define an annular space selected to substantially resist convection mixing with the atmosphere surrounding said housing.

In a typical plantlet culture environment, a suitable flange may extend below the sealing rim of the housing sufficient to form an air gap which may avoid capillary entrapment of a water bridge across the seal. For example, the flange may extend at least 3 mm and preferably 8 to 10 mm). Preferably the annular space is narrow enough to achieve the desired convection mixing control but not so narrow as to form a surface tension trap for condensation. Where a deeper flange is preferred, there may be mechanical constraints such as the need to distort the flange by a sufficient degree to open the housing. In these cases the flange may be stepped whereby the selected narrow annular space is bounded at is lower edge by an outward step to a lower flange portion, whereby there is provided a lower annular space providing a degree of reduced convection mixing and of a width sufficient to permit removal of the closure from the housing and an upper annular space selected to substantially resist convection mixing.

The closure may have a peripheral flange that is spaced inwardly of and extends downward of the housing lip to define an annular drip line for condensation away from the lip. By this means the seal between the housing and closure does not attract and retain liquid condensate as a conduit for contamination.

Preferably, the housing is adapted to receive a plurality of plantlet holders each including a plurality of body portions forming, in assembly, an open-topped container having apertures open to said nutrient medium in use, and engagement means disposed between adjacent said body portions and orienting said body portions in assembly for handling, and supported in a plantlet holder support located in the housing and supporting said plurality of plantlet holders in said nutrient medium in use, as described above.

The closure may have its selected permeability to metabolic gases produced or required by plantlets provided by inclusion of a gas permeable portion of the closure. Preferably the closure for said housing includes a gas permeable portion of either film material or fibrous material selected to allow exchange of metabolic gases produced or required by plantlets. The material may be hydrophobic or hydrophilic. For example, film materials may be selected from hydrophobic polyolefin materials. Fibrous materials may comprise hydrophilic or hydrophobic fibres in a woven or non-woven mat. There may be provided a cellulosic non-woven material having a proportion of polyolefin fibre therein to permit the mat to be heat sealed to a substrate such as the closure body.

Hydrophobic permeability of the closure to metabolic gases may be provided by any suitable means. By hydrophobic permeability to metabolic gases it is meant that metabolically relevant transfer of metabolic gases such as CO₂ and O₂ may relatively freely exchange through the closure. The material may be selected for its ability to control water vapour to tend water to be retained inside the housing. For example, there may be provided a closure including an annular body adapted to seal the housing closed and including a permeable closure portion closing over the aperture of the annulus and formed of a gas permeable hydrophobic material.

The gas permeable hydrophobic material may be selected from axially oriented crystalline polyolefins and other suitable membranous materials, and non-woven sheet materials. For example the hydrophobically permeable material may be selected from the synthetic materials, PP (Polypropylene), LDPE (low density polyethylene film), PVC (unplasticized polyvinylchloride film) and FEPC (fluorinated ethylene propylene copolymer film):
The gas permeable hydrophilic material may be selected from non-woven fibrous sheet materials, such as cellulose fibres with inclusion of a proportion of polyolefins to allow heat-sealing to the closure. The fibrous materials are selected to allow relatively free transfer of all gases, including water vapour, through the sheet material, but represent a tortuous path inhibiting the entry of particulate biological contaminants.

The permeable portion may be mechanically engaged with a body portion of the closure, or may be adhered to the closure body by adhesive or heat sealing. In the case of a moulded polymer closure, the closure may be formed with one or more apertures which are occluded by one or more layers of permeable material bonded or heat sealed to the inner or outer surface of the closure body. The permeable material may for example comprise biaxially oriented polypropylene (BOPP) which is able to be autoclaved for sterilization of the assembled closure while being heat sealable to a polypropylene closure body.

One example of a suitable hydrophobic and permeable material is biaxially oriented polypropylene (BOPP) laminate comprising film co-extruded on one or both sides with polyolefinic copolymers forming a heat sealable layer. Such films find applications based on the gas permeability properties, such as improving the shelf life of fresh produce and other applications requiring a high gas transfer rate. Typical values are an overall thickness of about 35µm, yielding 31.4 m²kg⁻¹ and having permeabilities (24hr) of 2.7 Lm⁻² (O₂) and 10.8 Lm⁻² (CO₂). Water vapour permeability varies from 0.8 gm⁻² per 24 hrs at 23°C and 85%RH to 6.0 gm⁻² per 24 hrs at 38°C and 90%RH.

The plantlet holders may take any suitable form. In a further aspect this invention resides broadly in a plantlet holder including:
a plurality of body portions forming, in assembly, an open-topped container; and
engagement means disposed between adjacent said body portions and orienting said body portions in assembly for handling.
The engagement means may be frangible at partition lines between the body portions. The plurality of body portions may include a moulded or otherwise formed body of natural or synthetic polymer material or natural or synthetic fibre composite. The body portions may be biodegradable or soluble including materials such as PLANTIC® WR700 or other modified starches, modified cellulose, and reactive polymers such as UV degraded or oxidisable polymers.

The plurality of body portions may be adapted to fit closely in assembly to form an impervious container. Alternatively the body portions may fit together to form slots or apertures along one or both of the partition lines between adjacent body portions to permit equilibration with surrounding plant propagation medium. Alternatively the body portions may be provided with selected apertures to allow for diffusion of nutrients and metabolites to and from the medium.

There may be provided at least two body portions. The body portions may be provided with complementary engagement means. The complementary engagement means may comprise closely fitting surfaces maintained in assembly by adhesion or surface tension of the plant propagation medium. Alternatively the complementary engagement means may include mechanical engagement means, including flexible hinges joining the components.

The complementary engagement means may comprise integral recesses and pins to permit assembly. The recesses and pins may be adapted for precision location with frictional engagement of the recesses and the pins being minimal in order to provide that root growth can separate the body portions.

The respective body portions may be relieved from the assembly slots allowing for diffusion of materials and egress of growing roots. The respective body portions may be relieved from the assembly slots allowing for diffusion of materials and egress of growing roots. Otherwise the body portions may be provided with apertures. The apertures may comprise one or more of complementary aperture shapes disposed about a partition line of the plantlet holder, and apertures through a side or bottom wall web of the plantlet holder.

The apertures may be any selected shape. For example, a round aperture of a given cross section may be used or, where a round hole of that cross section would be impractical for weakening the holder or making it dimensionally unstable to make, the aperture may be oval, oblong or any other selected shape.

The apertures may have a form dictated by functions other than allowing the diffusion of nutrients and metabolites and the egress of roots. For example, the apertures may be shaped having a transverse opening larger at the upper end than at the lower end. In addition to or in lieu of an aperture, the side wall of the plantlet holder may be relieved downward of the upper edge to provide access for a scalpel to trim or excise new plantlets from the main plant, requiring access to the basal portion of the plantlets from below the agar surface. For example there may be provided a generally V-shaped notch or valley extending from the upper edge. The relieved portion may intersect an aperture in the side wall to provide a deeper re-entrant. The apertures may comprise one or more vertical slots. Lugs or projections provide means for handling the plant holder by manual or mechanical means. The lugs or projections may be complementary between the body portions to provide a component of the engagement means.

The engagement means may comprise the aforementioned complementary engagement means or may be or include engagement means such as a flexible hinge.

The plantlet holders may be formed in multiples as a stock moulding wherein complementary halves of the plantlet holder are formed either side of a joiner strip, whereby the individual plantlet holders may be excised from the joiner strip as a conjoined pair of plantlet holder portions where the conjoined portion is a residual part of the joiner strip.

The residual part may comprise a frangible join between the plantlet holder portions whereby the parts may be broken before assembly to form the plantlet holder. Alternatively the residual part may include a self hinge crease whereby the plantlet holder portions may be assembled by folding the parts relative to the closed plantlet holder.

The residual part may be formed with mechanical engagement portions whereby the assembled plantlet holder is adapted for use with mechanical plantlet handling means such as a computer controlled mechanical handling means. The computer controlled mechanical handling means may form part of an integrated plant handling apparatus including electronic control of subsystems including one or more of plantlet holder excision and assembly, sterilization of parts, mixing and dispensing of nutrient media, changeover of nutrient media, insertion of plantlets into the plantlet holder support, handling supported plantlet holders *en mass* or plantlet holders individually, or the like.

The plantlet holder support may take any suitable form. For example there may be provided a support system for a plurality of the above plantlet holders and including a moulded or sheet-formed body having a plurality of apertures into which the assembled plantlet holders are located, the apertures serving as engagement means maintaining the plantlet holders in assembly for handling *en mass.* The moulded or sheet formed body may comprise or be associated with the plantlet box or housing with separate cells for the plantlet holders. Alternatively, the body may comprise a support system for a plurality of plantlet holders and adapted to suspend the plantlet holders in a housing relative to a nutrient.

Where the plantlet holders have slots or apertures about the partition lines between the body portions, the support system may include a nutrient medium bath to allow media replenishment or change by simply having desired liquid medium (or new agar-gelled medium) surrounding the plant holder, and allowing diffusion to add or remove components such as nutrients or hormones.

The plantlet holders may be formed as a single injection or other moulding, wherein the parts are retained in relative positions by sprues or tabs. For example, the plantlet holder may comprise a generally propagation-tube shaped container formed as a unitary moulding wherein the body portions are engaged in their relative positions for propagation by a connection portion located at one or both of the bottom or the top rim. In one embodiment the connection portion comprises a break-out closure at the bottom of the plantlet holder, providing the dual function of separating the parts on plant-out and opening a root aperture at the bottom of the container.

In a further aspect this invention resides broadly in a plant propagation transfer method including the steps of:
excising explants from a plant material source;
inserting said explants into a medium in individual open-topped plantlet holders each comprising a plurality of body portions engaged in frangible assembly for handling;
growing said explants to plantlets in light and air until roots form and extend toward the bottom of the holder; and
transferring said plantlet in its holder.

The medium may be selected from any medium suitable for growing the explants. Depending on the nature of the explants and the growing conditions selected the medium may be selected from sterile liquid and gel media.

The explant may be selected from an excised tip, nodal segment or other propagatable tissue.

The transfer may be to another tissue-culture propagation stage, a further acclimation stage, maybe to hydroponic or other artificial growing condition, or planting out into soil or growing medium. On planting out and subsequent growth it is intended that the roots and stem of the growing plant will push the plurality of body portions apart.

The steps of inserting the explants into an aqueous gel medium and growing said explants to plantlets may be interposed with a further step or steps wherein plantlets may be treated and transferred to new culture conditions prior to root growth.

In preparation for *ex-vitro* transfer, the aqueous gel medium may include inorganic nutrient and is preferably selected from phytocompatible supporting gels comprising an inorganic nutrient solution. For example, the solution may be gelled with an effective amount of a hydrocolloid gel forming material. The gel forming material may be selected from natural or synthetic hydrocolloid forming materials such as seaweed-derived gelling agents, agar, modified carbohydrate gelling agents or the like. Preferably the material forms a self supporting gel at low concentrations. For example, network gel polymers at ≤0.8% solids are preferred.

The inorganic nutrients may comprise any nutrient or combination of nutrients in concentration known in the art of plant tissue culture, hydroponic cultivation and plant propagation media. Organic nutrients are preferably avoided in the step prior to transfer ex-vitro to reduce the likelihood of proliferation of contaminating microorganisms such as fungi. In addition, the aqueous gel medium is preferably prepared under sterile conditions especially where the plantlets are segregated from sterile plant propagation stock. It has been surprisingly determined that acclimation in accordance with the present invention and in the substantial absence of organic nutrients in the medium such as sugars does not set the plantlets back substantially. There is zero or very low attrition attributable to the gel and a reduction in risk of fungal infections both in acclimation and *ex-vitro* transfer to nursery or other conditions.

Plants can be grown in agar-gelled medium containing organic as well as inorganic nutrients. The plantlet holder allows such plantlets to be prepared for transfer ex-vitro by immersing in a liquid nutrient solution or water to allow diffusion of organic components from the plantlet holder into the surrounding medium; this can be repeated if necessary with fresh surrounding medium until the organic components of the agar-gelled medium are sufficiently depleted.

The segregation of the plantlets into the aqueous gel medium may be with or without removal of the source nutrient. In the case of plantlets raised in agarified media, it may be appropriate to allow some pass-through of gelled medium to prevent root damage by cleaning. On the other hand, less persistent media may be removed by gently washing. In a yet further method the addition or removal of any components of the media may be done by diffusion into, or from, the surrounding medium of desired composition.

The acclimation conditions may be selected having regard to the plant variety involved. The conditions are at least as rigorous for the plant as the minimum conditions for conventional hardening up. In terms of light, it has been found that the acclimation process of the present invention can be done under a wide range of light conditions, including ambient nursery lighting conditions and typical plant growth-room conditions. No specialised atmosphere is required; species that are weaned off low O₂/high CO₂ atmospheres may be acclimated under ambient atmospheric conditions. However, the invention does not preclude the use of modified atmospheres where these are preferred.

Acclimation may occur for any suitable period of time determined principally by the survival of planted out plantlets and will vary from variety to variety. As a general rule, acclimation will continue to advantage the plant until the plant roots approach the bottom of the plantlet holder or partially egress into the surrounding space.

When the plantlet is established adequately, the plantlet holder is used to support transfer to soil of the intact column of gelled solution including the growing plantlet. Roots on the plantlet are protected within the gel that is held intact by the plantlet holder. Not only are roots protected by this system, but they are functional to the depth of the plant holder for better establishment in the soil. In addition the column of gelled solution provides a water resource that buffers the plant in the event of variation in watering regime. The plantlets are cultivated as for normally hardened plantlets in terms of regular watering, and the like.

In a further aspect this invention resides broadly in a plant cloning method including the steps of:
(i) providing plantlet handing apparatus as described above, wherein each plantlet holder of a source plantlet handing apparatus contains a plant for subculture, and wherein at least one medium containing subculture plantlet handing apparatus is provided to receive excisions of said plants;
(ii) substantially sterilizing said plantlet handing apparatus for mounting in a laminar flow cabinet including a robotic platform comprising a robot;
(iii) removing the lids of the plantlet handling apparatus;
(iv) extracting a source plantlet holder to present to an operator for excision;
(v) robotically presenting at least one subculture plantlet holder to a position adjacent said source plantlet holder;
(vi) excising said plant and placing an excised piece in each said presented subculture plantlet holder;
(vii) robotically placing said presented subculture plantlet holder containing an excised piece in an empty location in the plantlet holder support of a subculture plantlet handing apparatus;
(viii) repeating steps (v) to (viii) until said subculture plantlet handing apparatus are filled; and
(ix) replacing the lids on said subculture plantlet handing apparatus.

The methods of the present invention are amenable to robotic implementation. For example there may be provided a robotic platform comprising a six-axis robot that operates in a sterile laminar flow cabinet with suitably high precision such as 0.02 mm repeatability and speed such as up to 4.4 m/s.

For use in a cloning mode, a batch of up to nine containers (for example 216 plantlet holders) may be loaded consisting of up to three sealed containers of input plantlets (ready for subculture) that are sprayed with alcohol (surface decontamination) as they are loaded into a tray that quickly snaps into the robotic platform. Up to six output containers with empty plantlet holders are similarly sprayed and inserted into trays; these are filled with agar-gelled medium. The container lids are robotically removed (using integrated grip points) to a storage area within the sterile cabinet.

In the basic cloning mode, the first two plantlet holders (with plantlets) from the first input container are, in sequence, gripped by the robotic fingers and transferred to two corresponding plantlet holder-stands where they are suspended in front of the operator, alongside two output plantlet holders similarly transferred from the first output container. The operator readily excises a shoot (or other tissue) from the first input plantlet and transfers this to the first output plantlet holder, and signals completion using foot or other controls.

The robot fingers grip the finished output plantlet holder and quickly returns this to an empty position in the output container, then return with a replacement plantlet holder. Similarly, when all available dissections have been made from the first input plantlet holder, the operator may signal this with foot or other controls, and it is removed to the input container, and replaced. The operator thereby may always have at least one input plantlet and one empty output plantlet holder available to continue working, with the robot removing and replacing these as signalled.

While a cycle time of about six seconds is short, the operator is not rushed but has only to make the key dissection in a very accessible position, and directly controls the timing.

There may be several other options within the cloning program. Different types of explants may grow differently, so that separation is desirable. For example, micro-cutting methods typically produce tips and nodes; tips will root more rapidly and grow vertically from the apex, whereas with nodes rooting is often delayed until an axillary shoot develops, which will be at an angle to the stem, and multiple shoots often form. The present system allows optional grading of input and output plants.

A graphic interface may report progress in plan view. For example, a screen image may be placed for dissection and may visually illustrate status. The system may also facilitate rapid grading without dissection, such as for quality control and consolidation before shipping. The cycle time for grading is typically under three seconds per plantlet. Image-processing for automatic grading may also be included.

One feature of the system is the ability to change medium, and this may be performed with minimal operator input. Input containers and corresponding receiving containers with the new (liquid) medium are loaded and positions designated as shown in the screen image. Feedback on progress is also provided graphically. Transfer time may be approximately three seconds per plantlet, and operators can attend to other duties while a set of four pairs of containers are transferred. Speed and other variables are readily adjusted through a configuration page.

The robotic system is very powerful allowing essentially unlimited actions such as subtle "wiggling" of plantlet holders to free from agar, angular approaches when tall plants are to be avoided, shaking or twisting actions to ensure no entanglement with neighbouring leaves, etc. These actions go further than mimicking manual methods to provide more reliable results at high speed.

The robotic system also may provide data collection capability, allowing tracking of individual plantlets through all subcultures through to nursery transfer. Such tracking may provide clients with data for further improvement of subculture and growth regimes. It may also provide a management tool to flag time and location for collection of plantlets for dissection or other transfers, and monitoring of operator performance for positive feedback.

The system may be used as a powerful research tool for monitoring experimental treatments.

The robotic system may provide image capture for research purposes. For example, in large-scale transformation, the robotic system may capture photo images of each plantlet at multiple assessment stages, whereas in manual systems the cost is prohibitive. A camera may be attached to the robotic arm or, for better consistency, the plantlet can be taken to a defined camera position with balanced lighting or other requirements (e.g. fluorescence). The image record may be managed by the database for fool-proof correlation with the plantlet holder location.

The robotic system may provide ergonomic supports. While not practical for conventional tissue culture operations, the consistent placement of the plantlet holders in front of the operator facilitates appropriate positioning of arm supports for operator comfort. It is noted that the present system is deliberately based on processing batches of up to 9 containers (216 plantlets) which avoids potential for contamination spread in continuous approach. At the end of each batch, the operator may unload processed containers, spray the cabinet, and reload with new containers (robotic tools may be cleaned during this time). Accordingly, operators have a change of activity at intervals of about 20 minutes.

The robotic system may provide safety screens. For jurisdictions where additional safety restrictions may apply, the robot system may include a light screen system whereby penetration of a beam array triggers rapid freezing of the robot. Delivering plantlet holders to the operator may use a "shuttle" system whereby the screen is briefly opened while the robot is in defined rest positions. Shuttle plantlet holder stands may be moved by a magnetic drive beneath a smooth panel. Mechanical barriers (metal bars and screens) are a robust alternative, albeit not as elegant.

The robotic system may provide lid storage. Lids may be designed to be suitable for both robotic and manual removal. In the case of robotic operation, mechanical fingers first widen the lid to unlatch and allow removal from the container; the lid is then slightly compressed for insertion into recesses in the vertical storage panel, where they latch upon release.

The robotic system may provide tool cleaning. There may be provided a row of baths designed for immersion of robotic fingers. A series of complementary cleaning (such as detergent) and sterilising (such as ethanol or isopropanol) solutions can be used. Robotic movements can provide agitation as needed. Cleaning would normally occur during the brief reloading between batches of plantlets.

### BRIEF DESCRIPTION OF THE DRAWINGS

The invention will be described with reference to the following non-limiting embodiment of the invention as illustrated in the drawings and wherein:
Fig. 1 is a perspective view of a first plantlet holder apparatus in accordance with the present invention;
Fig. 2 is an exploded view of the apparatus of Fig. 1;
Fig. 3 is a perspective view of the apparatus of Fig. 1, when used in a propagation system;
Fig. 4 is a perspective view of a second embodiment of the present invention;
Fig. 5 is an exploded perspective view of a third embodiment of the present invention;
Fig. 6 is a perspective view of a fourth embodiment of the present invention;
Fig. 7 is a bottom plan view of the embodiment of Fig. 6;
Fig. 8 is an exploded perspective view of a plantlet handling system in accordance with the present invention;
Figs. 9 and 10 are perspective views (top and bottom) of an injection moulding of multiple plantlet holders for use with the apparatus of Fig. 8;
Figs. 11 and 12 are detail perspective views (front and back) of an in dividual plantlet holder excised from the multiple of Figs 9 and 10;
Figs 13 and 14 are perspective views of the assembled plantlet holder of
Figs 11 and 12;

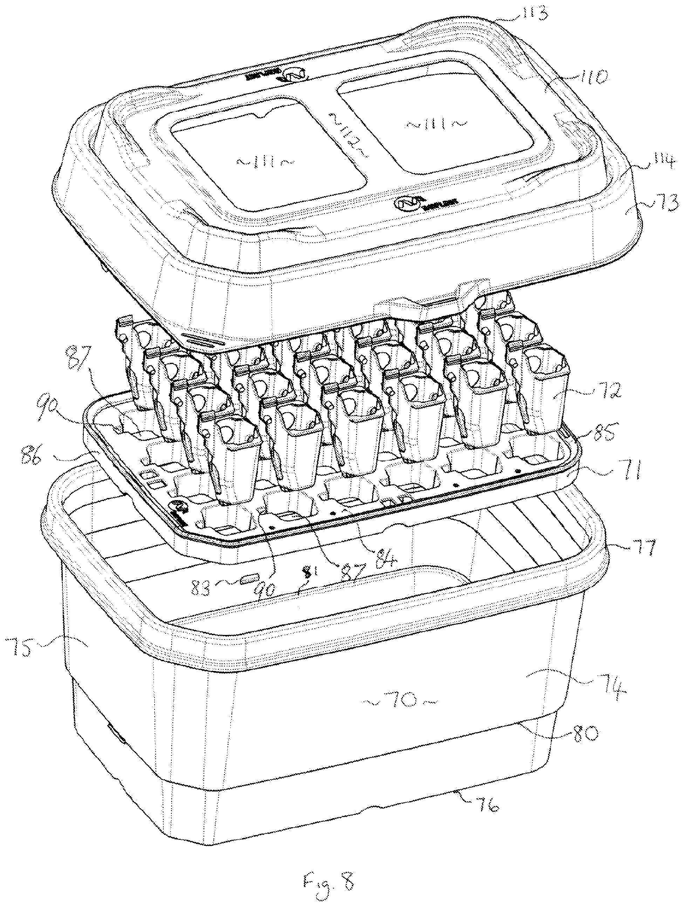

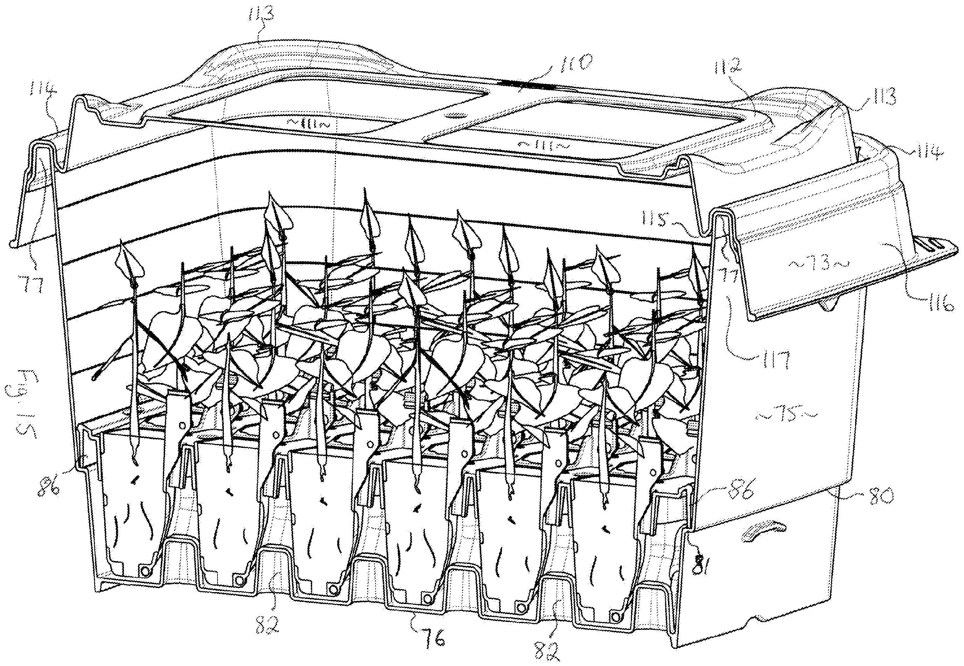

Fig. 15 is vertical section through the apparatus of Fig. 8, in use; and

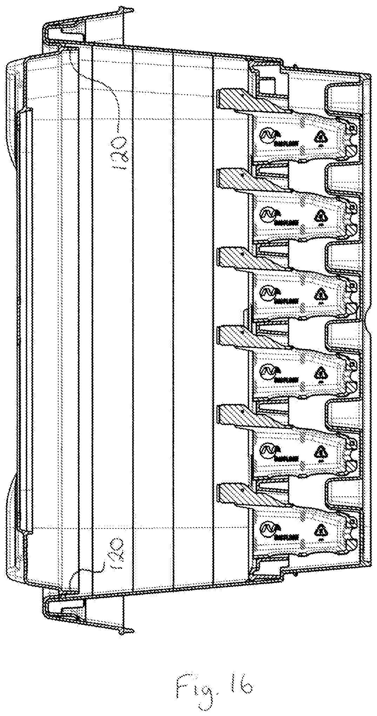

Fig. 16 is a vertical section through an alternate plantlet handling apparatus in accordance with the present invention.

In the figures 1 to 3 there is provided a plantlet holder 10 comprising left 11 and right 12 precision-moulded polypropylene body portions. The left body portion 11 forms a half-shell of an open-topped plantlet holder and the right body portion 12 forms a complementary half shell of the open topped plantlet holder. The respective body portions 11, 12 are each relieved at 13 to form in assembly slots 14 allowing for diffusion of materials and egress of growing roots. The remaining abutting edge portions of the body portions 11, 12 are adapted to fit closely.

The left body portion 11 has formed at the upper edge thereof a projection 15 that cooperates with a complementary projection 16 on the right body portion 12 to form a handle 17. The handle 17 permits the plantlet holder to be manipulated manually or by automated equipment.

Each of the left 11 and right 12 body portions are provided with integral recesses 20 and pins 21 to permit assembly. The frictional engagement of the recesses 20 and the pins 21 is minimal in order to provide that root growth can separate the body portions 11, 12. The adjacent edges 22 of the left 11 and right 12 body portions are a precision fit (permitted by the use of dimensionally stable precision moulding) whereby there is a degree of adhesion between the left 11 and right 12 body portions by the medium. The combination of the precise and frictional engagement of the recesses 20 and the pins 21 and the degree of adhesion between the left 11 and right 12 body portions by the medium in combination provides a first engagement means of the invention.

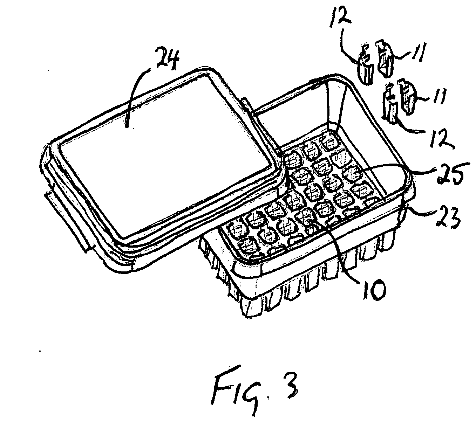

In order to allow for bulk manual or automated handling there may also be provided a culture system as illustrated in Fig. 3, wherein there is provided a moulded tray 23 and lid 24, the tray 23 having an integrally formed array of wells 25 each adapted to receive a plantlet holder 10, the well 25 serving to retain the left 11 and right 12 body portions together for medium filling.

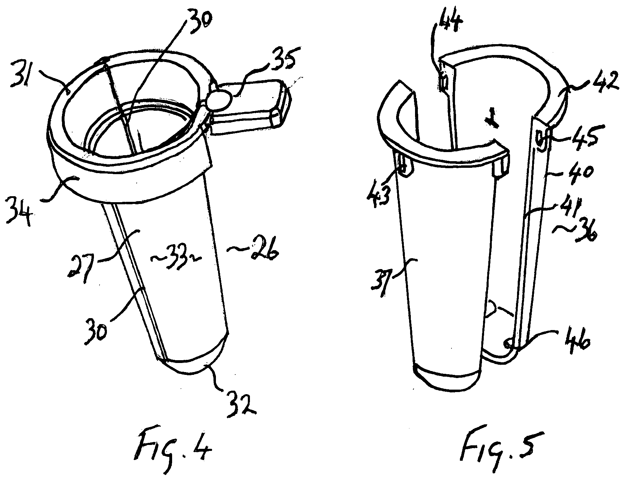

In the embodiment of Fig. 4 there is provided a plantlet holder 26 that is moulded in a single piece and comprising a plantlet holder body 27 substantially trifurcated by slots 30 extending from the upper rim 31 and meeting at the lower apex 32. The nascent three body portions 33 defined by the slots are retained by an integral tear-off collar 34. The tear-off collar 34 is formed with an integral and terminal tear tab 35.

At planting out the tear tab 35 may be pulled to detach the tear off collar 34 and separate the body portions. During the culture stages the tear-off collar 34 and the tear tab 35 may assist in supporting a plurality of the plantlet holders in a supporting aperture board or the like, and provide means for manual or automated handling.

In the embodiment of Fig. 5, there is provided a tapered round section plantlet holder 36 comprising left 37 and right 40 body portions having precision moulded mating surfaces 41. The upper rim of each of the body portions 37, 40 are provided with a flange 42 braced by integral buttressing lugs 43. The buttressing lugs 43 which are adjacent to mating surfaces 41 are provided with complementary pins 44 and recesses 45 which enable accurate alignment of the body portions 37, 40. Further complementary pins 46 stabilize the union of the body portions 37, 40 toward the lower portion thereof.

The combination of the precise engagement of the recesses 45 and the pins 44, the further pins 46 and their complementary recesses and the degree of adhesion between the mating surfaces 41 by the medium in combination provides a first engagement means of the invention.

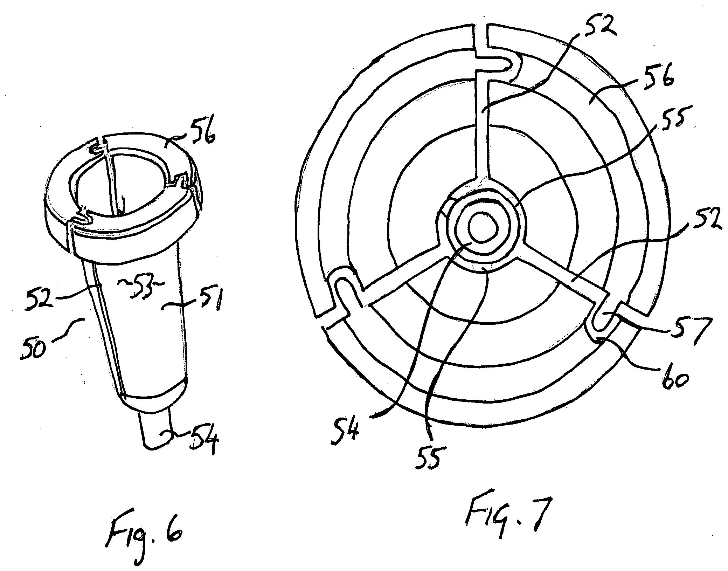

In the embodiment of Figs. 6 and 7 there is provided a moulded plantlet holder 50 that is moulded in a single piece and comprising a plantlet holder body 51 substantially trifurcated by slots 52 into body portions 53 conjoined at their bases by a tear-off pin 54 connected to each body portion by a frangible sprue 55. The upper edges of the body portions are stiffened by respective flange and collar portions 56. Form stability of moulded plantlet holder 50 at its upper end is provided by cooperation of integral lugs 57 and slots 60 formed on adjacent flange and collar portions 56.

At planting out the tear-off pin 54 may be twisted to cause failure of the frangible sprues 55 to separate the body portions 53. During the culture stages the flange and collar portions 56 assist in supporting a plurality of the plantlet holders in a supporting aperture board or the like, and provide means for manual or automated handling.

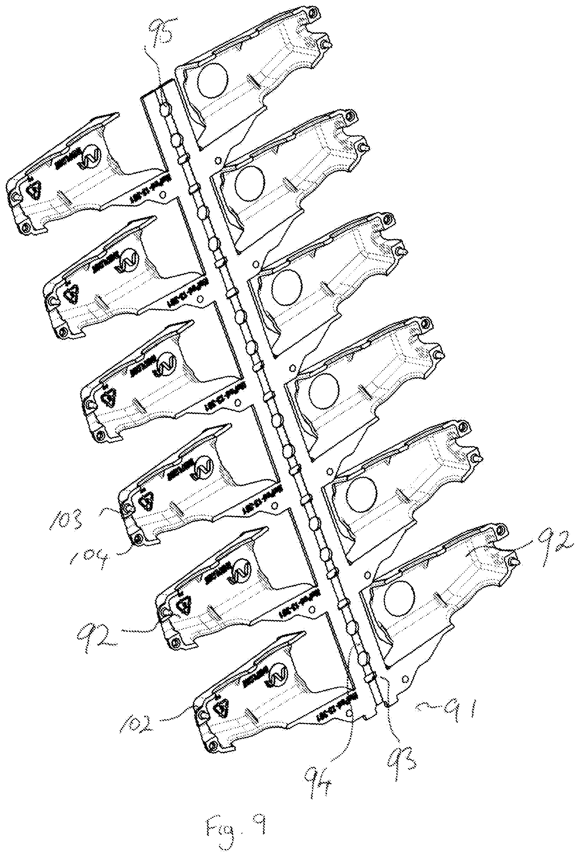

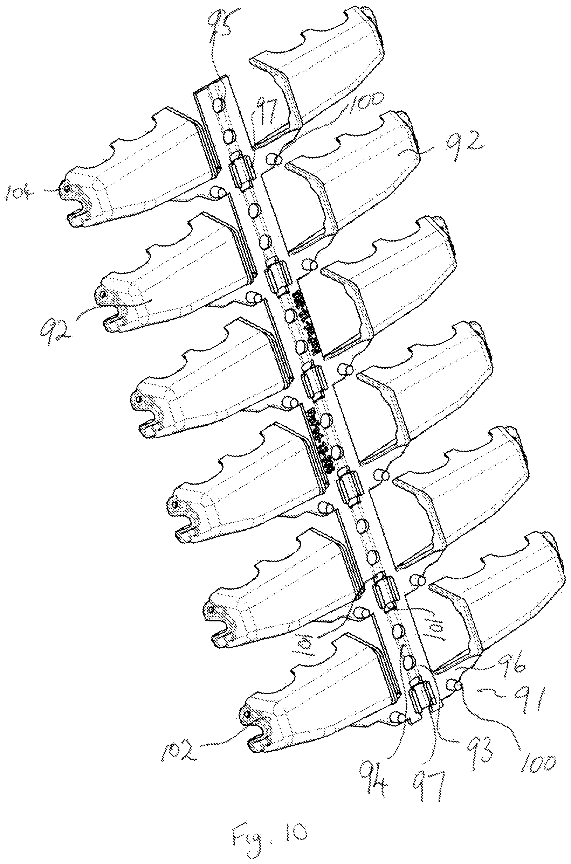

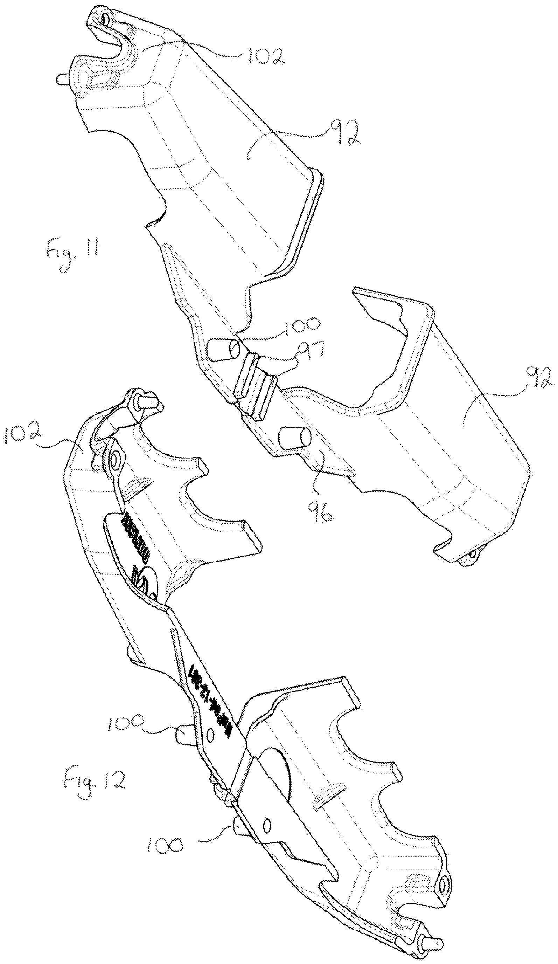

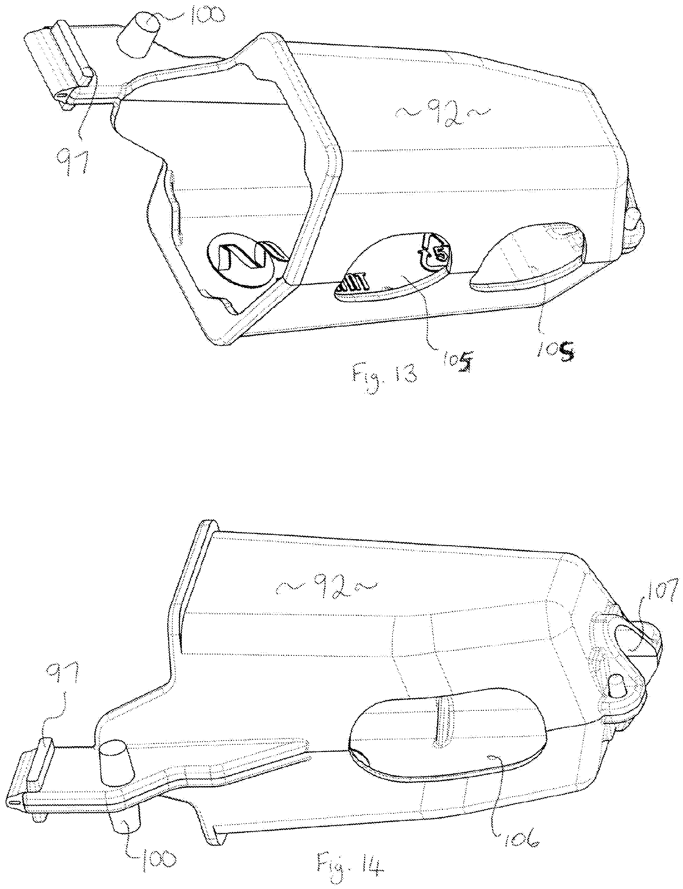

In the embodiment of Figs. 8 to 15 there is provided a plantlet handling apparatus including a housing 70 formed of a light-transmitting polypropylene, a plantlet holder support 71 similarly moulded in polypropylene, a plurality of plantlet holders 72, and a closure assembly 73.

The housing comprises side 74 and end 75 walls which are divergent up from a base wall 76 to provide for stack ability of the housings. The upper edges 77 of the side and end walls form a reinforced edge including a mechanical engagement for the closure assembly 73. There is provided a step 80 in the side 74 and end 75 walls and providing an annular supporting land 81 on the inside of the housing 70. The base wall 76 is formed with re-entrant portions 82 which enable the apparatus to be stacked complete with inserted holder supports 71 and plantlet holders 72 for shipping. The side walls 74 are provided with moulded nibs 83 which provide for positive engagement in position of the plantlet holder support 71 on the land 81.

The plantlet holder support 71 is unitarily moulded of polypropylene and has a body portion 84 bounded by a peripheral bead 85 disposed between the body portion 84 and a downward depending peripheral flange 86. In use the flange 86 supports the plantlet holder support 71 on the land 81 and the bead 85 clips under the nibs 83. The body portion 84 includes a plurality of apertures 87 in array on the body portion 84. The apertures 87 are shaped to accept the plantlet holders 72 and include a downward depending flange adapted to conform to an outer surface of the plantlet holder 72 and a recess portion 90 providing positive orientation of the plantlet holder 72, by means that will become apparent hereunder. The body portion 84 also includes indexing and handling apertures.

The plantlet holder 72 is produced by injection moulding a multiple strip 91 wherein plantlet holder halves 92 are conjoined by a central spine 93. The central spine 93 includes a self hinge crease 94 and indexing apertures 95. The plantlet holder halves 92 connect to the central spine via a respective half of a handling tab 96 including a handling lug 97 and a handling peg 100, the purpose of which will become apparent hereunder.

The indexing apertures 95 enable the multiple plantlet holder strip 91 to be positioned relative to a shearing device which accurately separates the plantlet holders 72 from the multiple strip 91, by shearing across the central spine 93 through guide apertures 101. The plantlet holder halves 92 have a tapering form from the top to a base portion 102. The base portions 102 of the respective plantlet holder halves 92 have respective engagement pins 103 and holes 104 which retain the two plantlet holder halves 92 together when the halves are closed together by bending about the self hinge crease 94.

The plantlet holder 72 when assembled has a pair of apertures 105 in one side disposed about the partition line, and a single large aperture 106 in the opposite side again disposed symmetrically about the partition line. The base portions 102 are also configured to close up forming a base aperture 107. The handling tabs 96 in the assembled plantlet holder 72 present single handling portions having opposed respective handling lugs 97 and handling pegs 100, and are adapted to be gripped by a handling robot. The handling portion doubles as a means for positive orientation by engaging in use in the recess portion 90 of the plantlet holder support 71.

The closure assembly 73 comprises a polypropylene moulded body portion 110 having formed in the upper surface a pair of windows 111 formed in a raised portion 112 which provides some stiffening of the upper surface. The upper surface is bounded by a peripheral stiffening ridge 113 which forms the inner boundary of a mechanical engagement portion 114 adapted to sealingly engage the complementary upper edges 77 of the side and end walls.

The inner, downward-depending edge 115 forms a drip line inside the housing in use. An outer flange 116 extends down past the upper edge 77 in use to define a dead space 117 which resists convection mixing.

The windows 111 are closed off by a biaxially oriented polypropylene (BOPP) film heat sealed to the raised portion 112 in order to provide a closure assembly that is substantially sealed to the housing to reduce the risk of biological contamination while permitting exchange of metabolic gases.

In the example of Fig. 16, the drip line inside the housing in use is provided by a formed blade edge 120.

Apparatus in accordance with the foregoing embodiments are mechanical devices that support individual tissue culture plantlets, allowing them to be readily handled as individuals for transfers between tissue culture flasks, and transfer ex-vitro to soil or other growing medium. The plantlet holder provides a solid projection for mechanical gripping and movement of individual plantlets without touching the plantlet shoots or roots directly.

A key feature is that the plantlet holders are comprised of two (or more) parts that are held together during *in vitro* growth, and through all transfers and manipulations.

The plantlet holder permits roots to grow through openings between the components. The partially open structure provides communication between the medium within the plantlet holder and the surrounding medium. The plantlet holder allows clean plantlets to be quickly removed from the presence of contamination if this is detected within part of the container.

The plantlet holder allows transfer to a new *in vitro* environment for replenishment of nutrients or change of medium or other growth conditions. The plantlet holder allows change in spacing of plantlets if needed during different growth phases. The plantlet holder allows selective removal of either retarded or advanced plantlets if these need to be transferred to different conditions.

The plantlet holder allows grading of plantlets for uniformity or designated heterogeneity during particular growth phases. The plantlet holder allows grading of plantlets for efficient release of plantlets or transfer to new conditions. The plantlet holder allows plants to be separated from other plantlets for improved accessibility for operator dissection operations without interference obscuring or confusion with aerial parts of neighbouring plantlets. There is no need to remove the plantlet holder from the plantlet on transfer to nursery pots, or to soil; roots will grow through the separation region between the components, with the solid plantlet holder components progressively displaced as roots grow.

While illustrated with application of micro-propagation methods, the plantlet holder system is applicable to many types of plant tissue culture, including organogenesis or somatic embryogenesis, and to transformation/regeneration systems. The plantlet holder system can be used with manual methods of handling using forceps and similar gripping tools, the system is also suitable for machine controlled tools to facilitate mechanized handling methods.

The system of the foregoing embodiment can address the key limitations to radically change conventional tissue culture. The central element is the "plantlet holder". This is a precisely moulded device that holds one plantlet within a custom container and, in essence, provides a "handle" on each plantlet to allow mechanical gripping.

A set of plantlet holders is suspended by plantlet holder support within a custom growth container. A manual version may involve a set of 16 plantlet holders held in a 4x4 array in a round tub. A second version may have a rectangular box holding 24 plantlet holders in a 6x4 array. The plantlet holder system provides a number of key features as follows:
i. Plantlet holders are suspended level with the surface of the plantlet holder support; it is filled to the upper lip with gelled medium, with the surface of surrounding medium (external to the plantlet holder) covered by the plantlet holder support.
ii. Raised tabs on the plantlet holders provide a mechanical grip point to hold with forceps or robotic fingers.
iii. The plantlet holders are constructed of two separable parts. These are oriented by complementary locating pins and a hinge, and held together by the plantlet holder support. When removed from the plantlet holder support they will continue to be held together if the raised tab is positively gripped, but otherwise will readily separate into two parts.
iv. Openings connecting the inner volume of the plantlet holder with the exterior are designed into the plantlet holder along the junction line between the two halves.
v. For the robotic version, a raised tab on the plantlet holders provides both a "ridge" for positive gripping by robotic fingers, and also a pair of support pins that allow positive placement on "hand - over" to a plantlet holder - stand or other receptacle.
vi. Lid designs incorporate either a selectively permeable membrane for CO₂ - O₂ exchange with low water loss, or a "venting" membrane for high water loss when pre-hardening plantlets. Box and lid designs facilitate sterility control.
vii. The components of the robotic consumables facilitate positioning and handling features for rapid loading of the custom robotic platform, removal and storage of lids, etc.
viii. All components have been designed for manufacturing and assembly efficiency, and will nest and stack in all assembly variations for volume efficiency in transport, sterilisation, media filling, and laboratory storage and tissue culture growth.
ix. Space efficiency is high with typical growing density (per layer) of 1000 plantlets/m².

The above features provide important capabilities.
i. Solid medium can be used with all plantlet holder designs, and all - liquid medium can be used with plantlet holders having smaller openings. A combination of solid medium within plantlet holders and liquid medium external is an option with all plantlet holder designs.
ii. Plantlets are generally anchored in gelled medium within a plantlet holder, providing mechanical stability for rapid movement of the plantlet holder/plantlet.
iii. Single plantlet holders (each with a plantlet) can be readily removed from one position in the vessel to another, or transferred between boxes singly or as a group. Plantlets can thereby be readily graded to address heterogeneity in growth within boxes.
iv. A single plantlet holder (with plantlet) can be isolated from a box (and other plantlets) to allow much easier access during dissection operations.
v. Plantlet holders can be transferred to boxes containing different media. Openings along the separation line facilitate efficient change of medium components by diffusion between agar - gelled medium and external liquid medium.
vi. Hormonal concentration and period regimes can be flexibly changed for optimal responses.
vii. Nutrient regimes can be dynamically changed to obtain optimal physiological response, particularly prior to transfer ex vitro.
viii. The gas exchange characteristics of the membrane lids facilitate healthy growth without desiccation. More robust plantlets can be produced with up to ten - fold greater biomass for the same plantlet height, which increases nursery success rates with shorter residence time and fewer labour steps.
ix. The plantlet holders do not need to be removed from the plantlets when they are transferred from tissue culture (to soil or potting mix); roots extend through the openings and the two plantlet holder 11 halves are simply displaced by the enlarging stem and roots. The plantlet holder provides a moisture reserve and physical protection to new roots. Mechanical transfer to soil is also enabled.
x. Importantly, the present plantlet holder system enables rapid and efficient robotic handling. Plantlets are conveniently presented to operators in an ergonomically appropriate way for easy dissection and transfer, with presentation interval of approximately six seconds. Operator efficiency is increased about fivefold over conventional tissue culture. These capabilities of the present system provide a powerful platform that radically changes the efficiency, capacity, quality and management of plant tissue culture operations. It is adaptable to different plant architectures, making it suitable for most, if not all, tissue culture systems. The flexible control of growth conditions may also make tissue culture successful with targets that are otherwise recalcitrant. More importantly, with the price sensitivity of many prospective targets, cost reductions possible from the present system can dramatically increase market demand.
The scope of the invention is defined by the appended claims.

## Claims

1. Plantlet handling apparatus including:
a housing (70) for an aqueous liquid or aqueous gel nutrient medium;
a plurality of plantlet holders (72) each including a plurality of body portions (92) forming, in assembly, an open-topped container having a tapering form from a top to a base portion (102), apertures open to said nutrient medium in use including a base aperture (107), and engagement means (103, 104) disposed between adjacent said body portions and engaging said body portions in assembly for handling;
a plantlet holder support (71) located in said housing and supporting said plurality of plantlet holders in said nutrient medium in use, **characterized in that** it further includes a closure (73) for said housing having a substantially airtight seal to said housing and having selected permeability to metabolic gases produced or required by plantlets, wherein the plantlet holder (72) has complementary halves (92), the base portions (102) of the respective plantlet holder halves (92) having respective engagement pins (103) and holes (104) which retain the two plantlet holder halves (92) together along a partition line when the halves are closed together by bending about a self hinge crease (94), the plantlet holder (72) when assembled having a pair of said apertures (105) in one side disposed about the partition line, and a single large said aperture (106) in the opposite side again disposed symmetrically about the partition line, there being provided a lug or projection on each said plantlet holder for handling the plantlet holder by manual or mechanical means, the closure (73) comprising a polypropylene moulded body portion (110) having formed in the upper surface a pair of windows (111) formed in a raised portion (112), the upper surface being bounded by a peripheral stiffening ridge (113), the windows (111) being closed off by a biaxially oriented polypropylene (BOPP) film heat sealed to the raised portion (112) to provide said selected permeability.

2. Plantlet handling apparatus according to claim 1, wherein the housing (70) comprises a substantially flat bottomed enclosure (76) for the nutrient medium and into which the supported plantlet holders (72) depend, the bottom (76) being provided with re-entrants (82) selected to enable close stacking of respective housings with the plantlet holder support (71) and said plantlet holders (72) installed.

3. Plantlet handling apparatus according to claim 1, wherein the closure (73) comprises a lid (110 - 113) having a complementary engagement periphery (114) adapted to mechanically and sealingly engage a corresponding peripheral housing lip (77).

4. Plantlet handling apparatus according to claim 3, wherein the closure (73) has a peripheral flange (116) that extends downward of the housing lip (77) outside of the housing (70) to define an annular dead space (117) that is not subject to convection mixing with the environment.

5. Plantlet handling apparatus according to claim 4 wherein the peripheral flange (116) is stepped whereby said annular dead space (117) is bounded at a lower edge by an outward step to a lower flange portion, whereby there is provided a lower annular space providing a degree of convection mixing and of a width sufficient to permit removal of the closure from the housing (70) and an upper annular space selected to substantially resist convection mixing.

6. Plantlet handling apparatus according to claim 4, wherein the closure (73) has a peripheral flange (115) that is spaced inwardly of and extends downward of the housing lip (77) to define an annular drip line for condensation away from the lip.

7. Plantlet handling apparatus according to claim 6, wherein the peripheral flange (115) extends downward of the housing lip (77) to define an annular drip line for condensation away from the lip to avoid liquid condensate retention and attraction across the seal.

8. Plantlet handling apparatus according to claim 6, wherein the peripheral flange (116) is stepped whereby said annular dead space (117) is bounded at a lower edge by an outward step to a lower flange portion, whereby there is provided a lower annular space providing a degree of convection mixing and of a width sufficient to permit removal of the closure from the housing and an upper annular space selected to substantially resist convection mixing.

9. Plantlet handling apparatus according to claim 1, wherein the apertures (105,106) are selected from round apertures of a given cross section or, where a round hole of that cross section would be impractical for weakening the holder (72) or making it dimensionally unstable to make, the aperture is selected from oval, oblong or any other selected shape.

10. Plantlet handling apparatus according to claim 1, wherein a side wall of the plantlet holder (72) is relieved downward of an upper edge to provide access to the basal portion of the plantlets for a scalpel to trim or excise new plantlets from the main plant.

11. Plantlet handling apparatus according to claim 1, wherein the plantlet holders (72) are formed in multiples as a stock moulding wherein said complementary halves (92) of the plantlet holder (10) are formed either side of a joiner strip (93), wherein the plantlet holders (72) are excised as a conjoined pair of plantlet holder portions (92) where the conjoined portion is a residual part of the joiner strip (93), and wherein the residual part includes said self hinge crease (94).

## Patentansprüche

1. Pflänzchenhandhabungsvorrichtung, die Folgendes umfasst:
ein Gehäuse (70) für ein wässriges Flüssig- oder wässriges Gel-Nährstoffmedium;
eine Vielzahl von Pflänzchenhaltern (72), die jeweils Folgendes umfassen: eine Vielzahl von Körperabschnitten (92), die, wenn zusammengesetzt, einen oben offenen Behälter mit einer von einem oberen zu einem Bodenabschnitt (102) verjüngten Form bilden, Öffnungen, die in Gebrauch zu dem Nährstoffmedium hin offen sind, einschließlich einer Bodenöffnung (107), und Eingriffsmittel (103, 104), die zwischen benachbarten Körperabschnitten angeordnet sind und die sich, wenn zusammengesetzt, zur Handhabung mit den Körperabschnitten im Eingriff befinden;
einen Pflänzchenhalterträger (71), der sich in dem Gehäuse befindet und die Vielzahl von Pflänzchenhaltern in Gebrauch in dem Nährstoffmedium trägt, **dadurch gekennzeichnet, dass** sie weiter Folgendes umfasst:
einen Verschluss (73) für das Gehäuse mit einer im Wesentlichen luftdichten Dichtung zu dem Gehäuse und mit ausgewählter Durchlässigkeit für von Pflänzchen erzeugten oder benötigten Stoffwechselgasen,
wobei der Pflänzchenhalter (72) komplementäre Hälften (92) aufweist, die Bodenabschnitte (102) der jeweiligen Pflänzchenhalterhälften (92) jeweilige Eingriffszapfen (103) bzw. Löcher (104) aufweisen, die die zwei Pflänzchenhalterhälften (92) entlang einer Trennlinie zusammenhalten, wenn die Hälften durch Biegen um einen Eigenscharnierfalz (94) gegeneinander geschlossen sind, wobei ein Paar der Öffnungen (105) des Pflänzchenhalters (72), wenn zusammengesetzt, in einer Seite um die Trennlinie herum angeordnet sind und eine einzige große Öffnung (106) in der gegenüberliegenden Seite ebenfalls symmetrisch um die Trennlinie angeordnet ist, wobei eine Lasche oder ein Vorsprung an jedem Pflänzchenhalter vorgesehen ist, um den Pflänzchenhalter durch manuelle oder mechanische Mittel zu handhaben, wobei der Verschluss (73) einen geformten Körperabschnitt (110) aus Polypropylen umfasst, der ein in der oberen Oberfläche gebildetes Paar Fenster (111) aufweist, die in einem erhöhten Abschnitt (112) gebildet sind, wobei die obere Oberfläche von einem Umfangs-Versteifungswulst (113) begrenzt ist, wobei die Fenster (111) mit einer biaxial orientierten Polypropylen(BOPP)-Folie verschlossen sind, die an den erhöhten Abschnitt (112) heißgesiegelt ist, um die ausgewählte Durchlässigkeit bereitzustellen.

2. Pflänzchenhandhabungsvorrichtung nach Anspruch 1, wobei das Gehäuse (70) eine Umhüllung (76) mit im Wesentlichen flachen Boden für das Nährstoffmedium umfasst und in das die getragenen Pflänzchenhalter (72) herunterhängen, wobei der Boden (76) mit Hinterspringungen (82) versehen ist, die ausgewählt sind, um das dichte Stapeln jeweiliger Gehäuse mit installiertem Pflänzchenhalterträger (71) und installierten Pflänzchenhaltern (72) zu ermöglichen.

3. Pflänzchenhandhabungsvorrichtung nach Anspruch 1, wobei der Verschluss (73) einen Deckel (110-113) mit einem komplementären Eingriffsrand (114) umfasst, der dazu angepasst ist mit einer entsprechenden Gehäuseumfangslippe (77) mechanisch und dichtend in Eingriff zu treten.

4. Pflänzchenhandhabungsvorrichtung nach Anspruch 3, wobei der Verschluss (73) einen Umfangsflansch (116) aufweist, der sich außerhalb des Gehäuses (70) unterhalb der Gehäuselippe (77) erstreckt, um einen ringförmigen Totraum (117) zu definieren, der keiner Konvektionsmischung mit der Umgebung unterliegt.

5. Pflänzchenhandhabungsvorrichtung nach Anspruch 4, wobei der Umfangsflansch (116) abgestuft ist, wodurch der ringförmige Totraum (117) an einem unteren Rand von einer nach außen weisenden Stufe zu einem unteren Flanschabschnitt begrenzt ist, wodurch ein unterer ringförmiger Raum, der einen Grad an Konvektionsmischung bereitstellt und eine Breite aufweist, die ausreicht, um das Abnehmen des Verschlusses von dem Gehäuse (70) zuzulassen, und ein oberer ringförmiger Raum, der ausgewählt ist, um Konvektionsmischung im Wesentlichen zu widerstehen, bereitgestellt werden.

6. Pflänzchenhandhabungsvorrichtung nach Anspruch 4, wobei der Verschluss (73) einen Umfangsflansch (115) aufweist, der von der Gehäuselippe (77) nach innen beabstandet ist und sich unterhalb derselben erstreckt, um eine ringförmige Tropfleitung für Kondensat von der Lippe weg zu definieren.

7. Pflänzchenhandhabungsvorrichtung nach Anspruch 6, wobei sich der Umfangsflansch (115) unterhalb der Gehäuselippe (77) erstreckt, um eine ringförmige Tropfleitung für Kondensat von der Lippe weg zu definieren, um zu vermeiden, dass flüssiges Kondensat über der Dichtung zurückgehalten und angezogen wird.

8. Pflänzchenhandhabungsvorrichtung nach Anspruch 6, wobei der Umfangsflansch (116) abgestuft ist, wodurch der ringförmige Totraum (117) an einem unteren Rand von einer nach außen weisenden Stufe zu einem unteren Flanschabschnitt begrenzt ist, wodurch ein unterer ringförmiger Raum, der einen Grad an Konvektionsmischung bereitstellt und eine Breite aufweist, die ausreicht, um das Abnehmen des Verschlusses von dem Gehäuse zuzulassen, und ein oberer ringförmiger Raum, der ausgewählt ist, um Konvektionsmischung im Wesentlichen zu widerstehen, bereitgestellt werden.

9. Pflänzchenhandhabungsvorrichtung nach Anspruch 1, wobei die Öffnungen (105, 106) aus runden Öffnungen mit gegebenem Querschnitt ausgewählt sind oder, wo ein rundes Loch dieses Querschnitts unpraktisch wäre, weil es den Halter (72) schwächt oder ihn bei der Herstellung forminstabil macht, die Öffnung aus Oval, Langloch oder einer anderen ausgewählten Form ausgewählt ist.

10. Pflänzchenhandhabungsvorrichtung nach Anspruch 1, wobei eine Seitenwand des Pflänzchenhalters (72) unterhalb eines oberen Rands verjüngt ist, um Zugang für ein Skalpell zu dem Basisabschnitt der Pflänzchen bereitzustellen, um neue Pflänzchen von der Hauptpflanze abzuschneiden oder daraus herauszuschneiden.

11. Pflänzchenhandhabungsvorrichtung nach Anspruch 1, wobei die Pflänzchenhandhabungsvorrichtung (72) in mehrfacher Form als Formteile gebildet werden, wobei die komplementären Hälften (92) des Pflänzchenhalters (10) auf beiden Seiten eines Verbindungsstreifens (93) gebildet werden, wobei die Pflänzchenhalter (72) als miteinander verbundenes Paar Pflänzchenhalterabschnitte (92) herausgetrennt werden, wobei es sich bei dem verbundenen Abschnitt um einen Restteil des Verbindungsstreifens (93) handelt und wobei der Restteil den Eigenschamierfalz (94) umfasst.

## Revendications

1. Appareil de manipulation de plantules comprenant :
un contenant (70) pour un milieu nutritif à liquide aqueux ou à gel aqueux ;
une pluralité de porte-plantules (72) comprenant une pluralité de parties corps (92) formant, une fois assemblées, un récipient ouvert en haut ayant une forme s'amincissant d'une partie haut à une partie base (102), des ouvertures ouvertes audit milieu nutritif utilisé comprenant une ouverture de base (107), un moyen d'engagement (103, 104) disposé entre lesdites parties corps adjacentes et s'engageant avec lesdites parties corps lors de l'assemblage pour la manipulation ;
un support de porte-plantules (71) situé dans ledit contenant et supportant ladite pluralité de porte-plantules dans ledit milieu nutritif en cours d'utilisation, **caractérisé en ce qu'**il comprend en outre :
un couvercle de fermeture (73) pour ledit contenant ayant un joint essentiellement étanche à l'air avec ledit contenant et ayant une perméabilité sélectionnée aux gaz métaboliques produits ou requis par les plantules,
le porte-plantule (72) ayant des moitiés complémentaires (92), les parties base (102) des moitiés respectives du porte-plantule (92) ayant des goupilles d'engagement (103) et des trous (104) respectifs qui maintiennent ensemble les deux moitiés du porte-plantule (92) le long d'une ligne de séparation lorsque les moitiés sont fermées ensemble en les pliant autour d'une pliure formant charnière (94), le porte-plantule (72), lorsqu'il est assemblé, ayant une paire desdites ouvertures (105) sur un côté disposées de part et d'autre de la ligne de séparation, et une seule grande dite ouverture (106) sur le côté opposé, elle aussi disposée symétriquement de part et d'autre de la ligne de séparation, un ergot ou une saillie étant prévue sur chaque dit porte-plantule pour manipuler le porte-plantule par des moyens manuels ou mécaniques, le couvercle de fermeture (73) comportant une partie corps moulée en polypropylène (110) ayant, formées dans la surface supérieure, une paire de fenêtres (111) formées dans une partie surélevée (112), la surface supérieure étant délimitée par une nervure de renforcement périphérique (113), les fenêtres (111) étant fermées par un film en polypropylène à orientation biaxiale (BOPP) thermoscellé à la partie surélevée (112) de façon à fournir ladite perméabilité sélectionnée.

2. Appareil de manipulation de plantules selon la revendication 1, dans lequel le contenant (70) comprend une enceinte à fond essentiellement plat (76) pour le milieu nutritif et dans laquelle les porte-plantules supportés (72) sont suspendus, le fond (76) étant pourvu de renfoncements (82) sélectionnés pour permettre l'empilage étroit des contenants respectifs avec le support de porte-plantules (71) et lesdits porte-plantules (72) installés.

3. Appareil de manipulation de plantules selon la revendication 1, dans lequel le couvercle de fermeture (73) consiste en un couvercle (110 - 113) ayant une périphérie d'engagement complémentaire (114) adaptée de façon à s'engager mécaniquement et hermétiquement avec une lèvre périphérique correspondante du contenant (77).

4. Appareil de manipulation de plantules selon la revendication 3, dans lequel le couvercle de fermeture (73) a une bride périphérique (116) qui s'étend vers le bas de la lèvre du contenant (77) à l'extérieur du contenant (70) afin de définir un espace mort annulaire (117) qui n'est pas soumis au mélange par convection avec l'environnement.

5. Appareil de manipulation de plantules selon la revendication 4, dans lequel la bride périphérique (116) est pourvue d'un gradin, comme quoi ledit espace mort annulaire (117) est délimité, à un bord inférieur, par un gradin extérieur relié à une partie bride inférieure, créant ainsi un espace annulaire inférieur fournissant un degré de mélange par convection et d'une largeur suffisante pour permettre d'enlever le couvercle de fermeture du contenant (70), et un espace annulaire supérieur sélectionné de façon à résister sensiblement au mélange par convection.

6. Appareil de manipulation de plantules selon la revendication 4, dans lequel le couvercle de fermeture (73) a une bride périphérique (115) qui est écartée vers l'intérieur de la lèvre du contenant (77) et qui s'étend vers le bas de celle-ci afin de définir une ligne annulaire d'égouttement pour éloigner la condensation de la lèvre.

7. Appareil de manipulation de plantules selon la revendication 6, dans lequel la bride périphérique (115) s'étend vers le bas de la lèvre du contenant (77) afin de définir une ligne annulaire d'égouttement pour éloigner la condensation de la lèvre de façon à éviter la rétention et l'attraction de condensat liquide à travers le joint d'étanchéité.

8. Appareil de manipulation de plantules selon la revendication 6, dans lequel la bride périphérique (116) est pourvue d'un gradin, comme quoi ledit espace mort annulaire (117) est délimité, à un bord inférieur, par un gradin extérieur relié à une partie bride inférieure, créant ainsi un espace annulaire inférieur fournissant un degré de mélange par convection et d'une largeur suffisante pour permettre d'enlever le couvercle de fermeture du contenant, et un espace annulaire supérieur sélectionné de façon à résister sensiblement au mélange par convection.

9. Appareil de manipulation de plantules selon la revendication 1, dans lequel les ouvertures (105, 106) sont sélectionnées parmi des ouvertures rondes d'une section transversale donnée ou, lorsqu'un trou rond ayant cette section transversale serait impossible parce qu'il affaiblirait le porte-plantule (72) ou qu'il rendrait sa fabrication dimensionnellement instable, l'ouverture est sélectionnée parmi les formes ovale, oblongue ou toute autre forme sélectionnée.

10. Appareil de manipulation de plantules selon la revendication 1, dans lequel une paroi latérale du porte-plantule (72) est dégagée vers le bas relativement à un bord supérieur pour fournir l'accès à la partie basale des plantules pour permettre à un scalpel de tailler ou d'exciser de nouveaux plantules de la plante principale.

11. Appareil de manipulation de plantules selon la revendication 1, dans lequel les porte-plantules (72) sont formés par multiples comme un moulage multiple dans lequel lesdites moitiés complémentaires (92) du porte-plantule (10) sont formées de part et d'autre d'une bande de jonction (93), dans lequel les porte-plantules (72) sont excisés comme une paire conjointe de parties de porte-plantules (92) où la partie conjointe est une partie résiduelle de la bande de jonction (93), et dans lequel la partie résiduelle comprend ladite pliure formant charnière (94).
